# EUROPEAN PATENT SPECIFICATION

(11) **EP 4 504 850 B1**
(45) Date of publication and mention of the grant of the patent: **30.09.2026**
(21) Application number: 22932605.3
(22) Date of filing: 23.03.2022
(51) Int. Cl.: C09J 175/14, C09J 175/04, C09J 175/08, C08G 18/69, C08G 18/79, C08G 18/10, C08G 18/08, C08G 18/32, C08G 18/48, C08G 18/66, C08K 3/22

(54) **TWO-COMPONENT POLYURETHANE BASED THERMAL CONDUCTIVE ADHESIVE COMPOSITION, POLYURETHANE BASED THERMAL CONDUCTIVE ADHESIVE AND ARTICLE THEREOF**
AUF ZWEIKOMPONENTEN-POLYURETHAN BASIERENDE WÄRMELEITFÄHIGE KLEBSTOFFZUSAMMENSETZUNG, AUF POLYURETHAN BASIERENDER WÄRMELEITFÄHIGER KLEBSTOFF UND ARTIKEL DARAUS
COMPOSITION ADHÉSIVE THERMOCONDUCTRICE À BASE DE POLYURÉTHANE À DEUX COMPOSANTS, ADHÉSIF THERMOCONDUCTEUR À BASE DE POLYURÉTHANE ET ARTICLE ASSOCIÉ

(43) Date of publication of application: 12.02.2025
(73) Proprietor: Henkel AG & Co. KGaA, 40589 Düsseldorf (DE)
(72) Inventor: WU, Xiulong, Shanghai 201203 (CN); LIU, Jie, Shanghai 200136 (CN); YANG, Jing, Shanghai 201203 (CN); GONG, Zhiqiang, Shanghai 201199 (CN)
(86) International application number: PCT/CN2022/082397
(87) International publication number: WO 2023/178536

(56) References cited:
- EP-A1- 3 835 332
- EP-A1- 3 835 332
- CN-A- 109 593 507
- CN-A- 111 534 268
- CN-A- 111 534 268
- CN-A- 111 808 570
- CN-A- 113 999 643

## Description

### Technical field

This invention relates to a two-component polyurethane based thermal conductive adhesive composition, a polyurethane based thermal conductive adhesive, and an article comprising the polyurethane based thermal conductive adhesive. The invention is set out in the appended set of claims.

### Background of the invention

Adhesive which are thermally conductive are employed in several applications where a component has to be fixed upon a structure and where heat has to be deflected from the component. Many applications are therefore in the field of electronics where excess thermal energy generated by the electronic components has to be expelled.

In the course of the ongoing development in the field of electromobility and the use of electric powered vehicles, in particular cars and trucks, it was found that materials with complex requirement specifications are needed. Especially fixing the energy storage device has proven to be a challenge, as any adhesives used need to exhibit a thermal conductivity to, for example, deflect any heat generated during charging of the energy storage device while at the same time possessing mechanical and adhesive properties that allow for a safe and long-lasting assembly. In addition, the adhesive used has to have a good adhesive property between surfaces with different surface energy values.

In general, increased thermal conductivity adversely effects the mechanical properties, especially for the adhesion between two substrates with different properties, e.g., between a low surface-energy surface and a high surface-energy surface.

CN 111534268 A discloses a low-viscosity and high-heat-conductivity two-component polyurethane adhesive comprising a component A and a component B. Component A comprises a first low-polar polyol, a low molecular weight chain extender, silane coupling agent, anti-foaming agent, a first dispensing agent, alumina, a first thixotropic agent, and water scavenger. Component B comprises an isocyanate-terminated polyurethane prepolymer, polyisocyanate, a second dispersing agent, alumina and a second thixotropic agent. The adhesive can be used to bond PET film and aluminum material.

CN 111808570 A discloses a two-component polyurethane adhesive, which comprises a component A and a component B. Component A comprises a hydroxyl-terminated polybutadiene polyol, a flame-retardant polyester polyol and an aromatic polyether polyol. Component B comprises a polyurethane prepolymer, and the polyurethane prepolymer is formed by polymerizing isocyanate, polyether polyol, dimer acid polyester polyol with a side group and phosphorus-containing polyol. The adhesive can be used to bond materials such as metals and plastic films.

EP 3835332 A1 discloses an adhesive composition comprising component (A) and component (B). Component (A) comprises a polyol, a chain extender and a surface-treated thermally conductive inorganic filler having isocyanate-reactive groups on the surface, and component (B) comprises an isocyanate-terminated compound.

### Summary of the invention

It is therefore the object of the present invention to overcome the above-mentioned drawbacks by providing an adhesive composition which favourably combines the good adhesion property and good thermal conductivity, and which is suitable for use in electric powered vehicles for the adhesion between two substrates with different properties.

It was surprisingly found that the object is solved by a polyurethane based thermal conductive adhesive comprising a cured product which is obtained from a two-component polyurethane based thermal conductive adhesive composition. The two-component polyurethane based thermal conductive adhesive composition comprising at least a thermal conductive filler, a polyhydroxy compound, a crosslinker, a special (poly)isocyanate prepolymer and an isocyanate-containing compound.

In one aspect, the present invention provides a two-component polyurethane based thermal conductive adhesive composition, which comprises: a component (A) comprising a polyhydroxy compound and a crosslinker, the polyhydroxy compound comprising a polyether polyol having a weight average molecular weight of 300 to 1,200 and a hydroxy functionality of 2; a component (B) comprising an isocyanate-containing compound and a (poly)isocyanate prepolymer having an active isocyanate group which is prepared by reacting a hydroxyl-terminated polybutadiene with excess amount of an aromatic isocyanate, wherein the mole ratio of the OH group of the hydroxyl-terminated polybutadiene to the NCO group of the aromatic isocyanate being from 0.23 to 0.32 in the formula of (poly)isocyanate prepolymer ; the component (A) and/or the component (B) comprising a thermal conductive filler, the contents of the thermal conductive filler being from 82.5-85.0 wt.% based on the total amount of the adhesive composition, the component (B) and the component (A) being present in a ratio of NCO group of the isocyanate-containing compound and (poly)isocyanate prepolymer to OH group of the polyhydroxy compound of 0.8-1.6.

In another aspect, the present invention also provides a polyurethane based thermal conductive adhesive, which is the cured product of the two-component polyurethane based thermal conductive adhesive composition.

Third, the present invention is also related to an article, especially an electric powered vehicle, comprising the polyurethane based thermal conductive adhesive.

Fourth, the present invention also provides a use of the cured product of the two-component polyurethane based thermal conductive adhesive composition as thermal conductive adhesive for bonding substrates, especially in the manufacture of battery in automotive industry.

### Detailed description of the invention

In the following passages the present invention is described in more detail. Each aspect so described may be combined with any other aspect or aspects unless clearly indicated to the contrary. In particularly, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise. As used in this specification and the appended claims, the term "or" is generally employed in its sense including "and/or" unless the content clearly dictates otherwise.

The terms "comprising", "comprises" and "comprised of" as used herein are synonymous with "including", "includes" or "containing", "contains", and are inclusive or open-ended and do not exclude additional, non-recited members, elements or process steps.

The recitation of numerical end points includes all numbers and fractions subsumed within the respective ranges, as well as the recited end points.

Unless otherwise defined, all terms used in the disclosing the invention, including technical and scientific terms, have the meaning as commonly understood by one of the ordinary skills in the art to which this invention belongs to. By means of further guidance, term definitions are included to better appreciate the teaching of the present invention.

In the context of this disclosure, several terms shall be utilized.

The thermal conductivity is determined according to ISO 22007-2:2015 (hot disk).

As used herein, "Mw" refers to the weight average molecular weight and means the theoretical value as determined by Gel Permeation Chromatography (GPC) relative to linear polystyrene standards of 1.1 M to 580 Da and may be performed using Waters 2695 separation module with a Waters 2414 differential refractometer (RI detector). "Mn" refers to the number average molecular weight and means the theoretical value as determined by Gel Permeation Chromatography (GPC) too.

The term "cure" refers to exposing to radiation in any form, heating, or allowing to undergo a physical or chemical reaction that results in hardening or an increase in viscosity.

### Component A

Component A of present two component polyurethane based thermal conductive adhesive composition comprises a polyhydroxy compound of a specific molecular weight and a specific hydroxy functionality, a crosslinker having a specific molecular weight.

### < Polyhydroxy compound>

In some preferred embodiments of the present invention, the polyhydroxy compound is a polyol having a molecular weight Mw of 300 to 1,200 g/mol, in particular 400 to 1,000 g/mol. And the hydroxy functionality of the polyol is 2. Even more preferably, the polyhydroxy compound comprises secondary hydroxyl groups. Even more preferably, the polyol is a polyether polyol, preferably a polyether diol which preferably comprises primary hydroxyl groups or a mixture of primary and secondary hydroxyl groups. Examples of suitable polyether polyols are polyoxyalkylene polyols such as polyethylene glycol, polypropylene glycol, polytetramethyl glycol und polybutyl glycol. Also, homopolymers or copolymers of the listed polyoxyalkylene polyols as well as mixtures thereof are suitable for the purpose of the present invention. Particularly suitable copolymers are those comprising an adduct of a compound selected from the group consisting of ethylene glycol, propylene glycol, diethylene glycol, propylene glycol, triethylene glycol, 2-ethylhexandiol-1,3- glycerine, trimethylolpropane, trimethylolethane, tris(hydroxyphenyl)propane, triethanolamine and triisopropylamine with at least one compound selected from the group consisting of ethylene oxide, propylene oxide and butylene oxide.

In some preferred embodiments, the polyhydroxy compound is a propylene glycol end-capped polypropylene glycol, or an ethylene glycol end-capped polyethylene glycol.

In some preferred embodiments, the polyhydroxy compound is selected from the group consisting of amorphous, partially crystalline polyester polyols, which are liquid at a temperature of 25 °C.

Examples of commercially available polyols are, for example, DESMOPHEN 1262 BD from Covestro, or VORANOL WD 2104 Polyol from Dow.

In some preferred embodiments of the invention, the component A and the component B are present in the composition in a lower limit of mole ratio of NCO/OH (the mole ratio of the NCO group on the free isocyanate-containing compound and (poly)isocyanate prepolymer to the hydroxyl group on the polyol) of 0.8, or 0.82, or 0.85, or 0.88, or 0.9, or 1.0, or 1.1; an upper limit of mole ratio of NCO/OH of 1.6, or 1.52, or 1.5, or 1.44, or 1.4, or 1.35, or 1.3, or 1.28, or 1.24, or 1.2, or 1.15. In some preferred embodiments of the invention, the component A and the component B are present in the composition in a mole ratio of NCO/OH of 0.8-1.6, or 0.9-1.2, when the ratio of A/B by volume is 1:1. It was surprisingly found that the adhesive properties of the thermal conductive adhesive composition can be improved if the amount of polyol is within in the claimed ranges.

The present thermal conductive adhesive composition unexpectedly showed the desired combination of properties, in particular, a high thermal conductivity in combination with excellent mechanical properties and adhesive property.

### <Crosslinker>

Component A comprises a crosslinker. Usually, crosslinkers are low molecular weight molecules used to link the polymer and form a network structure. In some embodiments, suitable crosslinkers are a low molecular weight molecule with a hydroxy functionality of 3. In some preferred embodiments, the crosslinker is selected from the group consisting of triol polyether polyol, triol polyester polyol and mixtures thereof.

In some preferred embodiments, the crosslinker is present in component A in an amount of at least 0.1 wt.%, or in an amount of 2 to 4.5 wt.%, or in an amount of 2.5 to 4 wt.%, based on the total weight of the two-component polyurethane based thermal conductive adhesive composition. It was found that the mechanical properties of the present thermal conductive adhesive composition could be adjusted as needed by varying the amount of crosslinker in component A.

Examples of commercially available crosslinkers are, for example, VORANOL CP 450 Polyol from Dow.

### <Thermal conductive filler >

In some embodiment, the thermal conductive filler may be present in the adhesive composition (or either or both of the component A and the component B).

In a preferred embodiment, the thermal conductive filler is selected from the group consisting of metal oxides, nonmetal oxide, metal nitride, nonmetal nitride, metal hydroxides, metal silicates, metal sulfides and combinations thereof.

Suitable metal oxides to be used as the thermal conductive fillers are preferably selected from the oxides of metals selected from the group consisting of tin, indium, antimony, aluminium, titanium, iron, magnesium, zinc, rare earth metals, alkaline metals, oxides of Mg, Ca, Sr and Ba, mixed metal oxides and mixtures thereof.

Suitable nonmetal oxides to be used as the thermal conductive fillers are preferably selected from the oxides of silicon.

Suitable metal nitrides to be used as the thermal conductive fillers are preferably selected from the nitrides of aluminium.

Suitable non-metal nitrides to be used as the thermal conductive fillers are preferably selected from the nitrides of boron, silicon, mixed nonmetal nitrides and mixtures thereof.

Suitable metal hydroxides to be used as the thermal conductive fillers are preferably selected from the hydroxides of metals selected from the group consisting of tin, indium, antimony, aluminium, titanium, iron, magnesium, zinc, rare earth metals, alkaline metals, hydroxides of Mg, Ca, Sr and Ba, mixed metal hydroxides and mixtures thereof.

Suitable metal silicates to be used as the thermal conductive fillers are preferably selected from the silicates of metals selected from the group consisting of tin, indium, antimony, aluminium, titanium, iron, magnesium, zinc, rare earth metals, alkaline metals, silicates of Mg, Ca, Sr and Ba, mixed metal silicates and mixtures thereof.

Suitable metal sulfides to be used as the thermal conductive fillers are preferably selected from the sulfides of metals selected from the group consisting of tin, indium, antimony, aluminium, titanium, iron, magnesium, zinc, rare earth metals, alkaline metals, sulfides of Mg, Ca, Sr and Ba, mixed metal sulfides and mixtures thereof.

In order to adapt the properties, in particular the thermal conductivity and the dispersibility of the filler, the material employed can be surface modified.

Examples of commercially available conductive fillers are, for example, QYH40 and QY5-1 from Suzhou Ginet New Material Technology Co., Ltd.; MARTINA ON-908 from J.M. Huber Corporation; FA-051 from Foshan Jinge Material Co., Ltd, BAK-40, BAK-5, NSM-2 from Ya'an Bestry Performance Materials Co., Ltd.

In some embodiments, the thermal conductive filler is present in component A and/or component B of two-component polyurethane based thermal conductive adhesive composition. The lower limit of the thermal conductive filler is 82.5 wt. %, or 82.85 wt. %, or 82.9 wt. %, or 83.0 wt. %, or 83.11 wt. %, or 83.39 wt. %, or 83.54 wt. %; the upper limit of the thermal conductive filler is 85.0 wt. %, or 84.1 wt. %, or 84.06 wt. %, or 83.71 wt. %, based on the total weight of the two-component polyurethane based thermal conductive adhesive composition. In some preferred embodiments, the thermal conductive filler is present in component A and/or component B of two-component polyurethane based thermal conductive adhesive composition in an amount of 82.5 to 85.0 wt.%, preferably 82.8 to 84.1 wt. %, based on the total weight of two-component polyurethane based thermal conductive adhesive composition.

It was surprisingly found that the thermal conductivity of the thermal conductive adhesive composition could be improved without substantially affecting the adhesive property if the amount of the thermal conductive filler was kept within the above ranges. The cured polyurethane-based adhesive exhibits a thermal conductivity of at least 1.98 W/(m·K), or at least 1.99 W/(m·K), or at least 2.00 W/(m·K), or at least 2.03 W/(m·K), or at least 2.10 W/(m·K), or at least 2.13 W/(m·K), or at least 2.20 W/(m·K), or at least 2.24 W/(m·K), or at least 2.40 W/(m·K), or at least 2.48 W/(m·K), or at least 2.50 W/(m·K), determined according to ISO 22007-2-2015.

### Component B

Component B of the present two-component polyurethane based thermal conductive adhesive composition comprises an isocyanate-containing compound, a (poly)isocyanate prepolymer. In some embodiments of the invention, component B comprises a mixture of an aromatic NCO-terminated compound, (poly)isocyanate prepolymers and a thermal conductive filler.

### < (poly)isocyanate prepolymer >

In some embodiments, the (poly)isocyanate prepolymers are reaction products of hydroxyl-terminated polybutadiene with an excess amount of isocyanates. More preferred (poly)isocyanate prepolymers can, for example, be obtained by reacting a polybutadiene diol with an excess amount of aromatic isocyanate.

The isocyanates as described above are selected from the groups consisting of 1,5-naphthylendiisocyanate (NDI), 2,4'- or 4,4'-Diphenylmethandiisocyanate (MDI), isomers of toluylendiisocyanates (TDI), methylentriphenyltriisocyanate (MIT), hydrated MDI (H12MDI), tetramethylxylylendiisocyanate (TMXDI), 1-isocyanatomethyl-3-isocyanato-1,5,5-trimethylcyclohexane (IPDI), xylylendiisocyanate (XDI), pentamethylendiisocyanate, dicyclohexylmethandiisocyanate as well as dimers, trimers, oligomers and polymers of the same.

The hydroxyl-terminated polybutadiene having a polybutadiene structure is 1,2-vinyl structure or 1,4-trans structure alone, or a mixed structure of 1,2-vinyl structure and 1,4-trans structure, or of 1,2-vinyl structure, 1,4-trans structure and 1,4-cis structure, or of 1,4-trans structure and 1,4-cis structure.

In some embodiments of the invention, the hydroxyl-terminated polybutadiene is a liquid linear non-hydrogenated hydroxyl-terminated polybutadiene at 25 °C.

In some embodiments of the invention, the hydroxyl-terminated polybutadiene is a polybutadiene diol having terminal hydroxyl groups and a number-average molecular weight (Mn) in the range of 1,000 - 5,000 g/mol, or 1,200 - 4,500 g/mol, or 2,000 - 3,000 g/mol, and/or an average hydroxyl (OH) functionality in the range of 1.7 - 3.5, or 1.9 - 2.6, or 2.2 - 2.5.

In some embodiments of the invention, the hydroxyl-terminated polybutadiene and an excess amount of isocyanates react at a mole ratio of OH:NCO (the mole ratio of hydroxyl groups on the hydroxyl-terminated polybutadiene to NCO groups on the aromatic isocyanates in the formula of (poly)isocyanate prepolymer) of 0.23 to 0.32, preferably 0.235 to 0.261.

In some embodiments, the lower limit of the (poly)isocyanate prepolymer is 6.5 wt. %, or 7.0 wt. %, or 7.09 wt. %, or 7.5 wt. %, or 7.51 wt. %, or 7.89 wt. %, or 8.24 wt. %; the upper limit of the thermal conductive filler is 10.00 wt. %, or 9.90 wt. %, or 9.50 wt. %, or 9.37 wt. %, based on the total weight of the two-component polyurethane based thermal conductive adhesive composition. In some embodiments, the (poly)isocyanate prepolymer is present in the two-component polyurethane based thermal conductive adhesive composition in an amount of 6.63 to 10.00 wt.%, or in an amount of 6.63 to 8.24wt.%, based on the total weight of the two-component polyurethane based thermal conductive adhesive composition.

In some embodiments, the lower limit of weight ratio of the hydroxyl-terminated polybutadiene is 3.00 wt. %, or 3.10 wt. %, or 3.20 wt. %, or 3.29 wt. %, or 3.31 wt. %, or 3.54 wt. %, or 3.65 wt. %; the upper limit of the hydroxyl-terminated polybutadiene in the adhesive composition is 5.50 wt. %, or 5.40 wt. %, or 5.10 wt. %, or 4.70 wt. %, or 4.12 wt. %, or 4.02 wt. %, or 3.95 wt. %, based on the total weight of the two-component polyurethane based thermal conductive adhesive composition. In some embodiments, the hydroxyl-terminated polybutadiene reacts with access amount of aromatic isocyanate, in an amount of 3.00 to 5.50 wt.%, or in an amount of 3.20 to 4.70 wt.%, or in an amount of 3.29 to 4.69 wt.%, based on the total weight of the two-component polyurethane based thermal conductive adhesive composition.

It was surprisingly found that the thermal conductive adhesive composition showed the desired combination of properties, especially, a high thermal conductivity in combination with excellent adhesive properties by using claimed (poly)isocyanate prepolymer.

### < isocyanate-containing compound >

In some preferred embodiments, the isocyanate-containing compound is selected from the groups consisting of 1,5-naphthylendiisocyanate (NDI), 2,4'- or 4,4'-diphenylmethandiisocyanate (MDI), isomers of toluylendiisocyanates (TDI), methylentriphenyltriisocyanate (MIT), hydrated MDI (H12MDI), tetramethylxylylendiisocyanate (TMXDI), 1-isocyanatomethyl-3-isocyanato-1,5,5-trimethylcyclohexane (IPDI), xylylendiisocyanate (XDI), hexan-1,6-diisocyanate (HDI), pentamethylendiisocyanate, dicyclohexylmethandiisocyanate as well as dimers, trimers, oligomers and polymers of the same.

In some especially preferred embodiments, the isocyanate-containing compound comprises aromatic NCO-terminated compound.

It should be understood that the isocyanate-containing compound comprises the unreacted free aromatic isocyanates from the excess amount of isocyanates in (poly)isocyanate prepolymer formulation.

In some preferred embodiments, the isocyanate-containing compound is a mixture of MDI isomers.

Examples of commercially available isocyanate-containing compounds are, for example, DESMODUR CD-C from Covestro, WANNATE CDMDI-100L from Wanhua Chemical.

In some embodiments, the isocyanate-containing compound is present in the two-component polyurethane based thermal conductive adhesive composition in an amount of at least 1 wt.%, or in an amount of 1.0 to 1.8 wt.%, or 1.2 to 1.6 wt.%, based on the total weight of the two-component polyurethane based thermal conductive adhesive composition.

### < Additives >

Apart from the thermal conductivity, the mechanical properties and adhesive property of the adhesive composition, other features have also to be taken into account, such as the processability. Especially the curability and viscosity of the thermal conductive adhesive composition has to be adapted for the respective applications. The composition according to the invention may further comprise additives. These optional additives may be used to affect the properties of the composition, for example processability, flame retardant properties and water removing. Preferably the one or more additives are selected from the group consisting of additional filler, pigments, rheology modifiers, drying agents, plasticizer, flame retardants, surface active agents, anti-foaming agents, dispersing agent, thixotropic agent.

In preferred embodiment the amount of additives present in thermal conductive adhesive composition is from 0.01 to 5.0 wt.%, preferably 0.1 to 3.3 wt.%, based on the total weight of the thermal conductive adhesive composition.

### < Adhesive composition >

It was surprisingly found that the mechanical properties and adhesive property of the inventive adhesive composition are advantageously balanced when the mixing ratio of component A to component B is within a certain range. Therefore, an embodiment of the present invention is preferred wherein the mixing volume ratio of component A to component B is from 0.9:1 to 1.1:1, preferably 1:1.

In order to be processable in industrial application, the thermal conductive adhesive composition needs to have a viscosity that allows easy and precise application. Therefore, some embodiments are preferred wherein the adhesive composition according to the invention has a viscosity of no more than 1500 Pa·s, preferably no more than 1,000 Pa·s, in particular 30 to 800 Pa·s, or 300 to 700 Pa·s, determined at 25°C (tested by Anton Paar Rheometer, using a PP25 spindle, at the shear rate of 1 s⁻¹ according to ASTM D2196-2015).

The present thermal conductive adhesive composition is thermally conductive. In some preferred embodiments, the cured polyurethane-based adhesive exhibits a thermal conductivity of at least 1.98 W/(m·K), or at least 1.99 W/(m·K), or at least 2.0 W/(m·K), or at least 2.1 W/(m·K), or at least 2.2 W/(m·K), or at least 2.48 W/(m·K), or at least 2.50 W/(m·K), determined according to ISO 22007-2-2015. It was surprisingly found that an advantageously balance between thermal conductivity and adhesiveness can be achieved if the formulation of the thermal conductive adhesive composition is chosen within the above ranges. Further, a thermal conductivity in the above range makes the adhesive composition especially suitable for use in the assemblies of energy storage devices, such as auto batteries.

Commonly, the thermal conductivity of a thermal conductive adhesive is achieved at the costs of the adhesive and mechanical properties of the adhesive. It was surprisingly found that the present polyurethane based thermal conductive adhesive not only exhibits excellent thermal conductivity, but also possess advantageous mechanical properties. In some preferred embodiments, the present cured polyurethane-based adhesive exhibits a lap shear strength (LSS) on untreated aluminum plate of equal to or greater than 7.8 MPa, preferably 9.0 MPa, more preferably 11.0 MPa, determined according to ASTM D1002-2010, and a peel strength on aluminum plastic film of equal to or greater than 588 N/m (600 gf/cm), preferably 637 N/m (650 gf/cm), preferably 686 N/m (700 gf/cm), more preferably 882 N/m (900 gf/cm), determined according to ASTM D903 -1998 at 23°C. It was surprisingly found that different adhesive properties on different materials could be balanced when the formulation of the cured adhesive composition was within the claimed range.

The cured polyurethane based thermal conductive adhesive composition is, in particular, suitable for use in the assembly of energy storage devices, e.g., battery. It is therefore important that the cured polyurethane based thermal conductive adhesive composition does not show any significant electrical conductivity. Meanwhile, it is preferred that the cured polyurethane based thermal conductive adhesive composition could show good flame retardant property.

### Preparing Method of the two-component polyurethane based thermal conductive adhesive composition

### Composition A:

1. Charging raw materials, including polyol, crosslinker and thermal conductive fillers to a mixer, heating to 85 °C, stirring for 2 hours under vacuum, controlling the water content below 500 ppm;
2. Cooling to 40 °C, then, adding additives and color paste if have, stirring for 2 hours under vacuum, controlling the system temperature below 40 °C;
3. Discharging the product, measuring the viscosity according to ASTM D2196-2015, tested by Anton Paar Rheometer, using a PP25 spindle, at the shear rate of 1 s⁻¹.

### (poly)isocyanate prepolymer:

1. Charging hydroxyl-terminated polybutadiene to a mixer, heating to 85 °C, stirring for 2 hours under vacuum, controlling the water content below 1500 ppm;
2. Cooling to 30 °C, keep stirring, charging aromatic isocyanate to the mixer, increasing the temperature to 80 °C, stirring for 2 hours under N₂ atmosphere;
3. Cooling to 40 °C, during the cooling process, keeping stirring under vacuum;
4. Discharging the product, measuring the NCO content according to the Spiegelberger method.

### Composition B:

1. Charging produced (poly)isocyanate prepolymer, isocyanate and thermal conductive filler to the mixer, stirring for 2 hours under vacuum, controlling the system temperature below 40 °C;
2. Discharging the product, measuring the viscosity and NCO content.

### Mixing & curing

This product is processed from universal cartridges with manual application tools (guns driven by hand, air pressure or battery). Only use cartridge pistols that are equipped with a piston rod. Prior to screwing the static mixer, a small amount of the material should be pressed out to ensure that both components are passed on simultaneously. After mixing, the adhesive is ready for use and must be processed within the given pot life, since viscosity increases when curing starts. The pot life depends on the temperature and mixed quantity. In order to avoid the bonded parts being displaced, it is recommended that they should always be fixed during the process of curing. Keep the static mixer attached while stop using, for further use of the product, simply remove the mixer and install a new one.

This product can be applied by using a suitable two-component system with high pressure pumps, the use of volume-controlled dispensers is preferred. These two components are mixed by a static mixing system or by using a dynamic mixing system. The given mixing ratio shall not deviate more than +/- 5 % from the setting value. Prior to screwing the static mixer, a small amount of the materials should be pressed out to ensure that both components are passed on simultaneously. To ensure proper mixing, discard the first approx. 10-20 cm of the adhesive bead. After the mixing, the material must be applied within the given pot life. If the application is interrupted, the mixture must be purged out of the mixer. If the interruption last considerably longer, the purging should be done by using only one of the components to stop the 2-component reaction. If application starts again, the mixing system must be purged again until all unmixed material has been rinsed out of the nozzle. Preferably immediately after mixing the adhesive should be applied to the parts to be bonded. The material is applied to one surface and the parts should be assembled directly.

### Examples:

The present invention will be further described and illustrated in detail with reference to the following examples. The examples are intended to assist one skilled in the art to better understand and practice the present invention, however, are not intended to restrict the scope of the present invention. All numbers in the examples are based on weight unless otherwise stated.

### Example 1 (E1)

### <Preparation of component A>

1. Charged 2.45 g polyol VORANOL WD 2104 Polyol (Fn=2, Mw=400), 6 g crosslinker VORANOL CP 450 Polyol (glycerine propoxylated polyether triol, Fn=3, Mw=450), 12 g alumina NSM-2, 41.16 g alumina QYH40, 27.5 g alumina QY5-1, 8.39 g aluminum hydroxide FA-051,1.8 g molecular sieve powered 3A (from Shanghai BOJ Molecular Sieve Co. Ltd.) to a PC Laborsystem Planetary mixer (type LPV 3 LA 2G-1430C-15), heated to 85 °C, stirred at 350 RPM for 2 hours under vacuum, controlled the water content below 500 ppm;
2. Cooled the mixture of step 1 to 40°C, then, added 0.5 g fumed silica AEROSIL R 202 (from EVONIK Company), 0.1 g DISPERBYK-145 (from BYK Company) and 0.1 g blue color paste177-5O2295 (from BOMEX Company), stirred at 350 RPM for 2 hours under vacuum, controlled the system temperature below 40 °C;
3. Discharged the product of step 2.

### <Preparation of prepolymer>

1. Charged 50 g hydroxyl-terminated polybutadiene Poly bd R-15HT (from IDEMITSU KOSAN Company, Mn=1200, Fn=2.4)to a PC Laborsystem Planetary mixer (type LPV 3 LA 2G-1430C-15), heat to 85 °C, stirred at 350 RPM for 2 hours under vacuum, controlled the water content below 1500 ppm;
2. Cooled the mixture of step 1 to 30 °C, kept stirring, charged 50 g isocyanate DESMODUR CD-C to the mixer, increased the temperature to 80 °C, stirred for 2 hours under N₂ atmosphere;
3. Cooled the product of step 2 to 40 °C, during the cooling process, kept stirring at 350 RPM under vacuum;
4. Discharged the product.

### <Preparation of component B>

1. Charged 3 g isocyanate DESMODUR CD-C, 16 g prepolymer PP3, 64.96 g alumina QYH40, 12.04 g alumina QY5-1, 0.88 g fumed silica AEROSIL R 202 (from EVONIK Company) and 3.12 g plasticizer DISFLAMOLL DPK (from LANXESS Company) to a PC Laborsystem Planetary mixer (type LPV 3 LA2G-1430C-15), stirred at 350 RPM for 2 hours under vacuum, controlled the system temperature below 40 °C;
2. Discharged the product.

### <Mixing>

Component A and Component B were mixed by a static mixing system at volume ratio of 1: 1. The mixed material was applied to a substrate and the other substrate should be assembled directly. Considering the density of component A and component B were 2.89 g/mL and 2.43 g/mL respectively; so, in Example 1, the weight ratio between component A and component B was 2.89: 2.43.

### Example 2-8 (E2-E8), and Comparative example 1-3 (CE1-CE3)

The adhesive compositions of E2 to E8 and CE1 to CE3 were prepared in reference to Example 1. More details are listed in below result part.

### Comparative example CE4

CE4 is a comparative example of E1. Prepolymer wasn't used, so, there was no preparation process of prepolymer; isocyanate DESMODUR CD-C and hydroxyl-terminated polybutadiene Poly bd R-15HT (from IDEMITSU KOSAN Company, Mn=1200, Fn=2.4) were separately added in part A and part B in step 1, the rest preparation process was the same as E1. More details are listed in table 2.

The prepared samples were subjected to various of tests.

### Test Methods

### <Peel Strength>

The peel strength was tested according to ASTM D903-1998. These two substrates are aluminum plate (25 mm width, 100 mm length) and aluminum plastic film (25 mm width, 200 mm length), the dust or grease on the surface of substrates need to be removed before using; the specimen was performed by bonding substrates together with adhesive, control the bonding area around 25 * 80 mm, the thickness around 0.3 mm.

The test specimens were cured for 7 days in a controlled environment room (23 °C, 50% relative humidity), and then tests of peel strength were performed by using a Zwick tension tester at moving speed of 300 mm/min. Each test was repeated thrice to get the average value in N/m (gf/cm).

Peel Strength results are recorded and ranked as follows:
- Not pass: lower than 588 N/m (600 gf/cm);
- Pass: greater than or equal to 588 N/m (600 gf/cm);
- Good: greater than or equal to 686 N/m (700 gf/cm);
- Excellent: greater than or equal to 882 N/m (900 gf/cm).

### <Lap Shear Strength>

The overlap shear strength was tested according to ASTM D1002-2010. Aluminum sample strips (25 mm width, 100 mm length) were wiped 3 times with isopropanol before using. Bond two aluminum sample strips together with adhesive, control the bonding area around 25 * 25 mm, the thickness around 0.3 mm.

Lap Shear Strength results are recorded and ranked as follows:
- Not pass: lower than 7.80 MPa;
- Pass: greater than or equal to 7.80 MPa;
- Good: greater than or equal to 9.0 MPa;
- Excellent: greater than or equal to 11.0 MPa

The test specimens were cured for 7 days in a controlled environment room (23 °C, 50% relative humidity), and then tests of overlap shear strength were performed by using a Zwick tension tester at moving speed of 12.7 mm/min. Each test was repeated thrice to get the average value in MPa.

### <Thermal conductive property>

The thermal conductivity was tested according to ISO 22007-2-2015. The test specimens were cured for 7 days in a controlled environment room (23 °C, 50% relative humidity), and then the measurement was conducted by room temperature (25° C), using test equipment Hot Disk TPS 3500. Each test was repeated thrice to get the average value in W/(m·K).

Thermal conductive results are recorded and ranked as follows:
- Not pass: lower than 1.98 W/(m·K);
- Pass: greater than or equal to 1.98 W/(m·K);
- Good: greater than or equal to 2.0 W/(m·K);
- Excellent: greater than or equal to 2.1 W/(m·K).

### Results

Table 1 show the formulation of prepolymers with different OH:NCO molar ratios.

**Table 1.**

| Prepolymer | PP1 | PP2 | PP3 | PP4 |
|---|---|---|---|---|
| Poly bd R-15HT | 37% | 45% | 50% | 55% |
| DESMODUR CD-C | 63% | 55% | 50% | 45% |
| Mole ratio of OH/NCO (The mole ratio of the hydroxyl group on the hydroxyl-terminated polybutadiene to the NCO group on the aromatic isocyanate, in the formula of polyurethane prepolymer) | 0.153 | 0.235 | 0.261 | 0.319 |

Table 2 shows the formulation of Examples 1 to 3 (E1-E3) and Comparative Example 1 (CE1 & CE4) with different prepolymers or without prepolymer.

**Table 2.**

| Example | CE1 (wt.%) | E1 (wt. %) | E2 (wt. %) | E3 (wt. %) | CE4 (wt. %) |
|---|---|---|---|---|---|
| Prepolymer | PP1 7.31% | PP3 7.31% | PP2 7.31% | PP4 7.31% | 0% |
| Isocyanate DESMODUR CD-C | 1.37% | 1.37% | 1.37% | 1.37% | 5.02% |
| Poly bd R-15HT | 0% | 0% | 0% | 0% | 3.65% |
| DISFLAMOLL DPK (Flame retardant/plasticizer) | 1.43% | 1.43% | 1.43% | 1.83% | 1.43% |
| VORANOL WD 2104 Polyol | 1.33% | 1.33% | 1.33% | 1.33% | 1.33% |
| Crosslinker VORANOL CP 450 Polyol | 3.26% | 3.26% | 3.26% | 3.26% | 3.26% |
| DISPERBYK-145 (dispersing agent) | 0.05% | 0.05% | 0.05% | 0.05% | 0.05% |
| Blue Color Paste 177-5O2295 (pigment) | 0.05% | 0.05% | 0.05% | 0.05% | 0.05% |
| molecular sieve powders 3A (drying agent) | 0.98% | 0.98% | 0.98% | 0.98% | 0.98% |
| Thermal conductive filler | 83.54% | 83.54% | 83.54% | 83.54% | 83.54% |
| Fumed silica AEROSIL R 202 (thixotropic agent) | 0.68% | 0.68% | 0.68% | 0.28% | 0.68% |
| Mole ratio of OH/NCO (The mole ratio of the hydroxyl group on the hydroxyl-terminated polybutadiene to the NCO group on the aromatic isocyanate, in the formula of poly(isocyanate) prepolymer) | 0.153 | 0.261 | 0.235 | 0.319 | 0 |
| Mole ratio of NCO/OH (The mole ratio of the NCO group on the free isocyanate and (poly)isocyanate prepolymer to the hydroxyl group on the polyol, in the formula of the two-component adhesive composition) | 1.23 | 0.95 | 1.08 | 0.84 | 0.95 |
| LSS (MPa) | 9.34 | 10.23 | 11.07 | 7.89 | 10.63 |
| Peel Strength (N/m (gf/cm)) | 122 (124) | 734 (749) | 650 (664) | 1008 (1029) | 376 (384) |
| Thermal Conductivity (W/(m·K)) | 2.10 | 2.10 | 2.10 | 2.10 | 2.09 |

It can be seen from the above Tables 1 and 2 that good adhesion property and good thermal conductivity can be achieved by using a (poly)isocyanate prepolymer having an active isocyanate group which is prepared by reacting a hydroxyl-terminated polybutadiene with excess amount of an aromatic isocyanate, wherein the mole ratio of OH group of the hydroxyl-terminated polybutadiene to NCO group of the aromatic isocyanate being within claimed scope. It was surprisingly found that thermal conductive adhesive showed the desired combination of properties, especially, excellent adhesive properties, at such a high loading ratio of thermal conductive filler, between two different surfaces.

Table 3 shows the formulation of Examples 4 to 8 (E4-E8) and Comparative Examples 2 to 3 (CE2-CE3).

**Table 3.**

| Example | E4 | E5 | E6 | E7 | E8 | CE2 | CE3 |
|---|---|---|---|---|---|---|---|
| Prepolymer PP3 | 7.09% | 7.51% | 6.63% | 7.89% | 8.24% | 9.37% | 10.22% |
| Isocyanate DESMODUR CD-C | 1.33% | 1.41% | 1.24% | 1.48% | 1.54% | 1.76% | 1.92% |
| DISFLAMOLL DPK | 1.38% | 1.46% | 1.29% | 1.54% | 1.61% | 1.83% | 1.99% |
| VORANOL WD 2104 Polyol | 1.36% | 1.30% | 1.44% | 1.24% | 1.19% | 1.01% | 0.89% |
| Crosslinker VORANOL CP 450 Polyol | 3.34% | 3.18% | 3.51% | 3.04% | 2.91% | 2.49% | 2.17% |
| DISPERBYK-145 | 0.06% | 0.05% | 0.06% | 0.05% | 0.05% | 0.04% | 0.04% |
| Blue Color Paste 177-5O2295 | 0.06% | 0.05% | 0.06% | 0.05% | 0.05% | 0.04% | 0.04% |
| molecular sieve powders 3A | 1.00% | 0.96% | 1.05% | 0.91% | 0.87% | 0.75% | 0.65% |
| Thermal Conductive Filler | 83.71 % | 83.39 % | 84.06 % | 83.11 % | 82.85 % | 81.99 % | 81.35% |
| Fumed silica AEROSIL R 202 | 0.67% | 0.68% | 0.66% | 0.69% | 0.70% | 0.72% | 0.74% |
| Mole ratio of NCO/OH (The mole ratio of NCO group on the free isocyanate and prepolymer to hydroxyl group on the polyol, in the formula of the two-component adhesive composition) | 0.90 | 1.00 | 0.80 | 1.10 | 1.20 | 1.60 | 2.00 |
| LSS (MPa) | 11.10 | 10.73 | 7.87 | 10.71 | 10.90 | 9.15 | 5.51 |
| Peel Strength (N/m (gf/cm)) | 696 (710) | 771 (787) | 797 (813) | 598 (610) | 601 (613) | 815 (832) | 884 (902) |
| Thermal conductivity (W/(m·K)) | 2.14 | 2.13 | 2.24 | 2.03 | 1.99 | 1.77 | 1.71 |

The higher amount of the thermal conductive filler is, the better the thermal conductivity is. It can be seen from the above table that the amount of thermal conductive filler can greatly affect the thermal conductivity, and the amount of the thermal conductive filler can also affect the adhesion properties, especially the lap shear strength. Meanwhile, the mole ratio of NCO group on the free isocyanate and prepolymer to hydroxyl group on the polyol, in the formula of the two-component adhesive composition, will also affect the adhesion properties, so, suitable mole ratio of NCO/OH in the formula of the two-component adhesive composition and the amount of thermal conductive filler are required for achieving the balance of all properties.

## Claims

1. A two-component polyurethane based thermal conductive adhesive composition comprises:
a) a component (A) comprising a polyhydroxy compound and a crosslinker, the polyhydroxy compound comprising polyether polyol having a weight average molecular weight of 300 to 1,200 and a hydroxy functionality of 2,
b) a component (B) comprising an isocyanate-containing compound and a (poly)isocyanate prepolymer having an active isocyanate group which is prepared by reacting a hydroxyl-terminated polybutadiene with excess amount of an aromatic isocyanate, wherein the mole ratio of the OH group of the hydroxyl-terminated polybutadiene to the NCO group of the aromatic isocyanate being from 0.23 to 0.32,
the component (A) and/or the component (B) comprising a thermal conductive filler, the contents of the thermal conductive filler being from 82.5-85.0 wt.% based on the total amount of the composition, the component (B) and the component (A) being present in a ratio of NCO group of the isocyanate-containing compound and (poly)isocyanate prepolymer to OH group of the polyhydroxy compound of 0.8-1.6.

2. The composition of claim 1, wherein the component (B) and the component (A) are present in a ratio of NCO group of the isocyanate-containing compound and (poly)isocyanate prepolymer to OH group of the polyhydroxy compound of 0.9-1.2.

3. The composition of claim 1, wherein hydroxyl-terminated polybutadiene having a polybutadiene structure is 1,2-vinyl structure or 1,4-trans structure alone, or a mixed structure of 1,2-vinyl structure and 1,4-trans structure, or of 1,2-vinyl structure, 1,4-trans structure and 1,4-cis structure, or of 1,4-trans structure and 1,4-cis structure.

4. The composition of claim1, wherein hydroxyl-terminated polybutadiene is a liquid linear non-hydrogenated hydroxyl-terminated polybutadiene at 25 °C.

5. The composition of claim 1, wherein the hydroxyl-terminated polybutadiene is a hydroxyl-terminated polybutadiene having a number-average molecular weight in the range of 1,000 - 5'000 g/mol, and/or an average hydroxy (OH) functionality in the range of 1.7 - 3.5.

6. The composition of claim 1, wherein the hydroxyl-terminated polybutadiene is a liquid hydroxyl-terminated polybutadiene having a number-average molecular weight (Mn) in the range of 1,200 - 4'500 g/mol, and/or an average hydroxy (OH) functionality in the range of 1.9 - 2.4.

7. The composition of claim 1, wherein the hydroxyl-terminated polybutadiene reacts with access amount of the aromatic isocyanate, in an amount of 3.00 to 5.50 wt.%, based on the total weight of the two-component polyurethane based thermal conductive adhesive composition.

8. The composition of claim 1, wherein the hydroxyl-terminated polybutadiene reacts with access amount of the aromatic isocyanate, in an amount of 3.29 to 4.69 wt.%, based on the total weight of the two-component polyurethane based thermal conductive adhesive composition.

9. The composition of claim 1, wherein the aromatic isocyanate is selected from the group consisting of TDI, 4,4'-diphenylmethane diisocyanate (MDI), carbodiimide-modified 4,4'-diphenylmethane diisocyanate (CMDI), and combinations thereof.

10. The composition of claim 1, wherein the (poly)isocyanate prepolymer having an active isocyanate group being prepared by reacting a hydroxyl-terminated polybutadiene with excess amount of the aromatic isocyanate, wherein the mole ratio of the OH group of the hydroxyl-terminated polybutadiene to the NCO group of the aromatic isocyanate being from 0.235 to 0.261.

11. The composition of claim 1, wherein the crosslinker has a weight average molecular weight of 400 to 500 and a hydroxy functionality of 3.

12. A cured product of the two-component polyurethane based adhesive composition of any one of claim 1 to claim 11.

13. The cured product of claim 12, wherein the cured product has a peel strength of equal to or greater than 600 gf/cm when subjected to ASTM D903-1998, an lap shear strength of equal to or greater than 7.8 MPa when subjected to ASTM D1002-2010, and a thermal conductivity of equal to or greater than 1.98 W/(m·K) when subjected to ISO 22007-2-2015.

14. An article comprising two different substrates, wherein the article comprised cured product of claim 12 as thermal conductive adhesive for bonding the substrates.

15. Use of the cured product of claim 12 as thermal conductive adhesive for bonding substrates, preferably in the manufacture of battery in automotive industry.

## Patentansprüche

1. Wärmeleitfähige, polyurethanbasierte Zweikomponentenklebstoffzusammensetzung, die umfasst:
a) eine Komponente (A), umfassend eine Polyhydroxyverbindung und einen Vernetzer, die Polyhydroxyverbindung umfassend Polyetherpolyol, das ein gewichtsmittleres Molekulargewicht von 300 bis 1.200 und eine Hydroxyfunktionalität von 2 aufweist,
b) eine Komponente (B), umfassend eine isocyanathaltige Verbindung und ein (Poly)isocyanatpräpolymer das eine aktive Isocyanatgruppe aufweist, das durch Umsetzen eines hydroxylterminierten Polybutadiens mit einer überschüssigen Menge eines aromatischen Isocyanats hergestellt wird, wobei das Molverhältnis der OH-Gruppe des hydroxylterminierten Polybutadiens zu der NCO-Gruppe des aromatischen Isocyanats von 0,23 bis 0,32 beträgt,
die Komponente (A) und/oder die Komponente (B) umfassend einen thermisch leitfähigen Füllstoff, wobei die Bestandteile des thermisch leitfähigen Füllstoffs 82,5-85,0 Gew.-%, bezogen auf die Gesamtmenge der Zusammensetzung, betragen, wobei die Komponente (B) und die Komponente (A) in einem Verhältnis von NCO-Gruppe der isocyanathaltigen Verbindung und (Poly)isocyanatpräpolymer zu OH-Gruppe der Polyhydroxyverbindung von 0,8~1,6 vorliegen.

2. Zusammensetzung nach Anspruch 1, wobei die Komponente (B) und die Komponente (A) in einem Verhältnis von NCO-Gruppe der isocyanathaltigen Verbindung und (Poly)Isocyanatpräpolymer zu OH-Gruppe der Polyhydroxyverbindung von 0,9~1,2 vorliegen.

3. Zusammensetzung nach Anspruch 1, wobei hydroxylterminiertes Polybutadien, das eine Polybutadienstruktur aufweist, allein eine 1,2-Vinyl-Struktur oder 1,4-trans-Struktur oder eine gemischte Struktur aus 1,2-Vinyl-Struktur und 1,4-trans-Struktur oder aus 1,2-Vinyl-Struktur, 1,4-trans-Struktur und 1,4-cis-Struktur oder aus 1,4-trans-Struktur und 1,4-cis-Struktur ist.

4. Zusammensetzung nach Anspruch 1, wobei hydroxylterminiertes Polybutadien ein flüssiges, lineares, nicht hydriertes hydroxylterminiertes Polybutadien bei 25 °C ist.

5. Zusammensetzung nach Anspruch 1, wobei das hydroxylterminierte Polybutadien ein hydroxylterminiertes Polybutadien ist, das ein zahlenmittleres Molekulargewicht in dem Bereich von 1.000 - 5.000 g/mol und/oder eine durchschnittliche Hydroxy(OH)-Funktionalität in dem Bereich von 1,7 - 3,5 aufweist.

6. Zusammensetzung nach Anspruch 1, wobei das hydroxylterminierte Polybutadien ein flüssiges hydroxylterminiertes Polybutadien ist, das ein zahlenmittleres Molekulargewicht (Mn) in dem Bereich von 1.200 - 4.500 g/mol und/oder eine durchschnittliche Hydroxy(OH)-Funktionalität in dem Bereich von 1,9 - 2,4 aufweist.

7. Zusammensetzung nach Anspruch 1, wobei das hydroxylterminierte Polybutadien mit einer Einstiegsmenge des aromatischen Isocyanats in einer Menge von 3,00 bis 5,50 Gew.-%, bezogen auf das Gesamtgewicht der wärmeleitfähigen, polyurethanbasierten Zweikomponentenklebstoffzusammensetzung, reagiert.

8. Zusammensetzung nach Anspruch 1, wobei das hydroxylterminierte Polybutadien mit einer Einstiegsmenge des aromatischen Isocyanats in einer Menge von 3,29 bis 4,69 Gew.-%, bezogen auf das Gesamtgewicht der wärmeleitfähigen, polyurethanbasierten Zweikomponentenklebstoffzusammensetzung, reagiert.

9. Zusammensetzung nach Anspruch 1, wobei das aromatische Isocyanat ausgewählt ist aus der Gruppe, bestehend aus TDI, 4,4'-Diphenylmethandiisocyanat (MDI), carbodiimidmodifiziertem 4,4'-Diphenylmethandiisocyanat (CMDI) und Kombinationen davon.

10. Zusammensetzung nach Anspruch 1, wobei das (Poly)isocyanatpräpolymer, das eine aktive Isocyanatgruppe aufweist, durch Umsetzen eines hydroxylterminierten Polybutadiens mit einer überschüssigen Menge des aromatischen Isocyanats hergestellt wird, wobei das Molverhältnis der OH-Gruppe des hydroxylterminierten Polybutadiens zu der NCO-Gruppe des aromatischen Isocyanats von 0,235 bis 0,261 beträgt.

11. Zusammensetzung nach Anspruch 1, wobei der Vernetzer ein gewichtsmittleres Molekulargewicht von 400 bis 500 und eine Hydroxyfunktionalität von 3 aufweist.

12. Gehärtetes Produkt der polyurethanbasierten Zweikomponentenklebstoffzusammensetzung nach einem der Ansprüche 1 bis 11.

13. Gehärtetes Produkt nach Anspruch 12, wobei das gehärtete Produkt eine Schälfestigkeit von gleich oder größer als 600 gf/cm bei Prüfung nach ASTM D903-1998, eine Zugscherfestigkeit von gleich oder größer als 7,8 MPa bei Prüfung nach ASTM D1002-2010 und eine Wärmeleitfähigkeit von gleich oder größer als 1,98 W/(m K) bei Prüfung nach ISO 22007-2-2015 aufweist.

14. Erzeugnis, umfassend zwei unterschiedliche Substrate, wobei das Erzeugnis das gehärtete Produkt nach Anspruch 12 als wärmeleitfähigen Klebstoff zum Verkleben der Substrate umfasst.

15. Verwendung des gehärteten Produkts nach Anspruch 12 als wärmeleitfähigen Klebstoff zum Verkleben von Substraten, vorzugsweise bei der Fertigung von Batterien in der Automobilindustrie.

## Revendications

1. Composition adhésive thermoconductrice à base de polyuréthane à deux composants comprenant :
a) un composant (A) comprenant un composé polyhydroxy et un agent de réticulation, le composé polyhydroxy comprenant un polyol de polyéther ayant une masse moléculaire moyenne en poids de 300 à 1 200 et une fonctionnalité hydroxy de 2,
b) un composant (B) comprenant un composé à teneur en isocyanate et un prépolymère de (poly)isocyanate ayant un groupe isocyanate actif qui est préparé par réaction d'un polybutadiène à terminaison hydroxyle avec une quantité en excès d'un isocyanate aromatique, dans laquelle le rapport molaire entre le groupe OH du polybutadiène à terminaison hydroxyle et le groupe NCO de l'isocyanate aromatique va de 0,23 à 0,32,
le composant (A) et/ou le composant (B) comprenant une charge thermoconductrice, la teneur en charge thermoconductrice allant de 82,5 à 85,0 % en poids sur la base de la quantité totale de la composition, le composant (B) et le composant (A) étant présents dans un rapport entre groupe NCO du composé à teneur en isocyanate et du prépolymère de (poly)isocyanate et groupe OH du composé polyhydroxy de 0,8 ~ 1,6.

2. Composition selon la revendication 1, dans laquelle le composant (B) et le composant (A) sont présents dans un rapport entre groupe NCO du composé à teneur en isocyanate et du prépolymère de (poly)isocyanate et groupe OH du composé polyhydroxy de 0,9 ~ 1,2.

3. Composition selon la revendication 1, dans laquelle le polybutadiène à terminaison hydroxyle ayant une structure de polybutadiène est une structure 1,2-vinyle ou une structure 1,4-trans seule, ou une structure mixte de structure 1,2-vinyle et de structure 1,4-trans, ou de structure 1,2-vinyle, de structure 1,4-trans et de structure 1,4-cis, ou de structure 1,4-trans et de structure 1,4-cis.

4. Composition selon la revendication 1, dans laquelle le polybutadiène à terminaison hydroxyle est un polybutadiène linéaire non hydrogéné à terminaison hydroxyle liquide à 25 °C.

5. Composition selon la revendication 1, dans laquelle le polybutadiène à terminaison hydroxyle est un polybutadiène à terminaison hydroxyle ayant une masse moléculaire moyenne en nombre comprise dans la plage de 1 000 à 5 000 g/mol, et/ou une fonctionnalité moyenne d'hydroxy (OH) comprise dans la plage de 1,7 à 3,5.

6. Composition selon la revendication 1, dans laquelle le polybutadiène à terminaison hydroxyle est un polybutadiène liquide à terminaison hydroxyle ayant une masse moléculaire moyenne en nombre (Mn) comprise dans la plage de 1 200 à 4 500 g/mol, et/ou une fonctionnalité moyenne d'hydroxy (OH) comprise dans la plage de 1,9 à 2,4.

7. Composition selon la revendication 1, dans laquelle le polybutadiène à terminaison hydroxyle réagit avec une quantité d'accès de l'isocyanate aromatique, en une quantité de 3,00 à 5,50 % en poids, sur la base du poids total de la composition adhésive thermoconductrice à base de polyuréthane à deux composants.

8. Composition selon la revendication 1, dans laquelle le polybutadiène à terminaison hydroxyle réagit avec une quantité d'accès de l'isocyanate aromatique, en une quantité de 3,29 à 4,69 % en poids, sur la base du poids total de la composition adhésive thermoconductrice à base de polyuréthane à deux composants.

9. Composition selon la revendication 1, dans laquelle l'isocyanate aromatique est choisi dans le groupe constitué de TDI, diisocyanate de 4,4'-diphénylméthane (MDI), diisocyanate de 4,4'-diphénylméthane modifié par carbodiimide (CMDI), et combinaisons de ceux-ci.

10. Composition selon la revendication 1, dans laquelle le prépolymère de (poly)isocyanate ayant un groupe isocyanate actif est préparé par réaction d'un polybutadiène à terminaison hydroxyle avec une quantité en excès de l'isocyanate aromatique, dans laquelle le rapport molaire entre le groupe OH du polybutadiène à terminaison hydroxyle et le groupe NCO de l'isocyanate aromatique va de 0,235 à 0,261.

11. Composition selon la revendication 1, dans laquelle l'agent de réticulation a une masse moléculaire moyenne en poids de 400 à 500 et une fonctionnalité hydroxy de 3.

12. Produit durci de la composition adhésive à base de polyuréthane à deux composants selon l'une quelconque des revendications 1 à 11.

13. Produit durci selon la revendication 12, dans lequel le produit durci a une résistance au pelage égale ou supérieure à 600 gf/cm lorsqu'il est soumis à la norme ASTM D903-1998, une résistance au cisaillement de recouvrement égale ou supérieure à 7,8 MPa lorsqu'il est soumis à la norme ASTM D1002-2010, et une conductivité thermique égale ou supérieure à 1,98 W/(m·K) lorsqu'il est soumis à la norme ISO 22007-2-2015.

14. Article comprenant deux substrats différents, dans lequel l'article comprend un produit durci selon la revendication 12 en tant qu'adhésif thermoconducteur permettant de lier les substrats.

15. Utilisation du produit durci selon la revendication 12 en tant qu'adhésif thermoconducteur permettant de coller des substrats, de préférence dans la fabrication de batteries dans l'industrie automobile.
